# EUROPÄISCHE PATENTANMELDUNG

(11) **EP 1 521 085 A1**
(43) Veröffentlichungstag der Anmeldung: **06.04.2005**
(21) Anmeldenummer: 04019336.9
(22) Anmeldetag: 14.08.2004
(51) Int. Cl.: G01P 5/00, B65H 61/00

(54) **Verfahren und Vorrichtung zum berührungslosen Bestimmen der Geschwindigkeit eines laufenden Fadens**

(30) Priorität: 13.09.2003 DE 10342383
(71) Anmelder: Saurer GmbH & Co. KG, 41069 Mönchengladbach (DE)
(72) Erfinder: Sturm, Christian, 47798 Krefeld (DE); Spix, Guido, 41564 Kaarst (DE); Hermanns, Ferdinand Dr., 41812 Erkelenz (DE); Linden, Martin, 53424 Remagen (DE)

(57) **Zusammenfassung**

Zur berührungslosen Bestimmung der Geschwindigkeit eines laufenden Fadens mit einer Sensoreinrichtung an einer Spulstelle einer Textilmaschine wird von einer Lichtquelle ein Laserstrahl (33) erzeugt. Dieser wird in zwei Laserstrahlen (35, 36) geteilt, die am laufenden Faden (2) wieder zusammentreffen. Aus dem vom Faden reflektierten Licht werden mittels des Laser-Doppler-Anemometrie-Verfahrens Meßsignale erzeugt. Die Meßsignale werden für eine Längenmessung ausgewertet und zur exakteren Bestimmung von Garnfehlern herangezogen. Die Erfindung läßt sich kostengünstig einsetzen und dient der Qualitätsverbesserung des Fadens (2).

## Beschreibung

Verfahren und Vorrichtung zum berührungslosen Bestimmen der Geschwindigkeit eines laufenden Fadens

Die Erfindung betrifft ein Verfahren zum berührungslosen Bestimmen der Geschwindigkeit eines laufenden Fadens nach dem Oberbegriff des Anspruchs 1 und eine Vorrichtung nach dem Oberbegriff des Anspruchs 6.

Spulstellen moderner Textilmaschinen zur Erzeugung von Kreuzspulen sind mit Einrichtungen für die Geschwindigkeitsmessung und die Längenmessung des laufenden Fadens ausgerüstet. Ständig steigende Anforderungen an die Qualität des Garns haben zur Überwachung von Garnparametern, wie zum Beispiel dem Garndurchmesser, nicht nur an ausgewählten Spulstellen, sondern an jeder einzelnen Spulstelle geführt. Bei der Überwachung des Garndurchmessers wird für die Bewertung, ob eine Abweichung vom Soll-Garndurchmesser als Garnfehler einzustufen ist, üblicherweise auch die Länge der Abweichung herangezogen. Die Ermittlung der genauen Fehlerlänge ist daher ein wesentlicher Bestandteil der Qualitätsüberwachung des Garns.

Klassische, mechanische Meßverfahren zur Geschwindigkeitsmessung des laufenden Fadens arbeiten mit abrollenden Meßrädern. Mit dem Auftreten von Schlupf ist Reibung zwischen dem Garn und der Oberfläche des Meßrades verbunden. Neben der durch den Schlupf entstehenden Meßungenauigkeit können durch die Reibung bei empfindlichen Fäden nachteilige Qualitätsbeeinträchtigungen auftreten. Um derartige Nachteile zu vermeiden, ist es bekannt, berührungslose Meßverfahren in der Textilindustrie einzusetzen.

Zur experimentellen berührungslosen Messung der Geschwindigkeit von Einzelfasern im Luftstrom eines Faserleitkanals, wie er in einer Offenend-Spinnmaschine eingesetzt wird, ist es aus der Literaturstelle Bauer "Laser-Doppler-Anemometrie", Chemiefasern / Textilindustrie 37./89. (1987) Sept., Seite 829 und 832, bekannt, das Verfahren der Laser-Doppler-Anemometrie (nachfolgend LDA genannt) einzusetzen. Das beschriebene LDA-Verfahren wird lediglich für Forschungszwecke auf dem Gebiet der experimentellen Strömungsmechanik bei strömungstechnischen Untersuchungen von Faserluftströmungen vorgeschlagen, wie sie vor allem bei der Erforschung neuer Spinnverfahren durchgeführt werden. Bisher waren hierbei ohne Einsatz des LDA-Verfahrens strömungstechnische Optimierungsmaßnahmen überhaupt nur bedingt durchführbar.

Die Literaturstelle Ringens u. a. "Optoelektronischer Sensor zur berührungslosen Geschwindigkeitsmessung an textilen Oberflächen", textil praxis international (1988) Juni, Seite 640 bis 643, beschreibt die Geschwindigkeitsmessung an Oberflächen von Warenbahnen, zum Beispiel von Geweben, die im Rahmen eines Forschungsvorhabens durchgeführt wurde. Das beschriebene Referenzstrahl-Doppler-Anemometrie-Verfahren basiert auf dem Dopplereffekt. Wenn sich Sender und Empfänger relativ zueinander bewegen, tritt eine Frequenzverschiebung in Abhängigkeit von der Relativgeschwindigkeit auf.

Durch Auswertung der Frequenzverschiebung läßt sich die Geschwindigkeit des bewegten Körpers bei ortsfestem Empfänger bestimmen. Beim Referenzstrahl-Doppler-Anemometrie-Verfahren wird mit einem Referenzstrahl und einem Meßstrahl gearbeitet. Dabei überlagern sich im Empfänger die in der Frequenz nicht verschobene Referenzwelle und das reflektierte Streulicht des Doppler-verschobenen Meßstrahls.

Das Referenzstrahlverfahren weist den Nachteil auf, daß die Intensität des Referenzstrahles und die Intensität des von der Oberfläche reflektierten Meßstrahles deutlich voneinander abweichen. Um die gleiche Intensität wie der Meßstrahl zu erhalten, was eine Voraussetzung für ein gutes sogenanntes "Signal-zu-Rausch-Verhältnis" darstellt, muß der Referenzstrahl wesentlich geschwächt werden. Dies gelingt aber nur bedingt, da die Streuleistung bewegter Partikel von ihrer Größe und Oberfläche abhängt. Zudem ist bei Einsatz handelsüblicher Meßsysteme dieser Art ein großer, baulicher und auswertungstechnischer Aufwand erforderlich.

In der Literaturstelle Backmann u. a. "Berührungslose Geschwindigkeitsmessung am laufenden Faden", Melliand Textilberichte (1993) 7, Seite 639 bis 640, wird ausgeführt, daß zwar in der Literatur Geschwindigkeitsmeßverfahren nach dem Prinzip der LDA beschrieben werden, daß jedoch für die Praxis noch kein kostenverträgliches LDA-Meßverfahren existiert. Der Gesamtaufwand für derartige Meßsysteme wird trotz Miniaturisierung und Anpassung der optischen Bauelemente ausdrücklich als zu hoch bezeichnet. In der Veröffentlichung wird deshalb als geeignete alternative Möglichkeit für den praktischen Einsatz die Anwendung des Korrelationsmeßververfahrens untersucht und beschrieben.

Die in der Literatur behandelten LDA-Verfahren betreffen durchweg Anwendungen als Versuchseinrichtungen im Labor bei Forschungsvorhaben, wobei erheblicher Aufwand und hohe Kosten in Kauf genommen werden. Ein Einsatz in Textilmaschinen, die eine Vielzahl von Arbeitsstellen aufweisen, erscheint wegen hoher Kosten und wegen des geringen zur Verfügung stehenden Bauraumes nicht sinnvoll und wird in der Literatur sogar als unmöglich bezeichnet.

Die gattungsbildende DE 42 25 842 A1 beschreibt eine Vorrichtung zum Messen der Geschwindigkeit von Textilfäden an einer Wickeleinrichtung nach dem Korrelationsmeßverfahren. Beim Auf- oder Umspulen von Spinnkopsen auf eine Kreuzspule wird dem Faden eine Hin- und Herbewegung quer zur Fadenlaufrichtung erteilt. Durch diese Hin- und Herbewegung variiert die Geschwindigkeit des einen Sensor durchlaufenden Fadens, abhängig von der Verlegefrequenz des Fadens, um ca. ± 35 %. Wird die momentane Fadengeschwindigkeit beispielsweise als Mittelwert aus den Meßwerten bestimmt, ist die Auswertung der Garnfehlerlängen für die Ausreinigung des Garns entsprechend ungenau. Damit besteht die Gefahr von Qualitätsminderungen des Garns und Produktivitätseinbußen der Textilmaschine.

Die Fadengeschwindigkeit ist bei Spulmaschinen zum Umspulen des Fadens ca. 10mal größer als bei Spinnmaschinen, bei denen der gesponnene Faden an der Spinnstelle auf eine Kreuzspule aufgewickelt wird. Bei derartig hohen Fadengeschwindigkeiten und -verlegefrequenzen kann die lückenlose Aufbereitung der Signale zu Schwierigkeiten führen. Es kann der Fall eintreten, daß die Rechenleistung der eingesetzten, handelsüblichen Mikroprozessoren dafür bei weitem nicht mehr ausreicht.

Es ist Aufgabe der Erfindung, die Bestimmung der Geschwindigkeit des laufenden Fadens an einer Arbeitsstelle einer Vielstellen-Textilmaschine zu verbessern.

Diese Aufgabe wird mittels eines Verfahrens mit den Merkmalen des Anspruchs 1 und mittels einer Vorrichtung mit den Merkmalen des Anspruchs 6 gelöst.

Vorteilhafte Ausgestaltungen der Erfindung sind Gegenstand der Unteransprüche.

Bei einem von einer Lichtquelle erzeugten Laserstrahl, der in zwei Strahlen aufgeteilt wird, die am laufenden Faden wieder zusammentreffen, ist die Intensität der Strahlen, die beide als Meßstrahlen zusammenwirken, angeglichen. Damit ist ein gutes Signal-zu-Rausch-Verhältnis gegeben. Die Erzeugung von Meßsignalen aus den beiden vom Faden reflektierten Laserstrahlen nach dem LDA-Verfahren erlaubt eine hochgenaue Geschwindigkeits- beziehungsweise Längenbestimmung, bei der das anfallende Rechenvolumen von handelsüblichen Mikroprozessoren ohne weiteres bewältigt werden kann.

Auf der Basis dieser hochgenauen Messung lassen sich in Verbindung mit einer Messung des Fadendurchmessers die Längen von Garnfehlern außerordentlich exakt bestimmen. Damit kann die Einteilung in tolerierbare Garnfehler einerseits und durch Schneiden des Fadens auszureinigende Garnfehler andererseits zutreffender erfolgen. Nichttolerierbare Fehler werden vollständig und richtig erkannt. Das Ausreinigen von tolerierbaren Garnfehlern, die durch Mängel bei der Geschwindigkeitsbestimmung nach dem Stand der Technik fälschlicherweise als nichttolerierbar eingestuft werden, sowie das Schaffen unnötiger Fadenverbindungsstellen wird vermieden. Dadurch steigt die Garnqualität und die Produktivität der Spulstelle.

Dient gemäß Anspruch 3 oder Anspruch 7 der Laserstrahl zusätzlich der Bestimmung des Durchmessers des Fadens und wird gemäß Anspruch 5 oder Anspruch 9 das vom Faden reflektierte Licht der Laserstrahlen zusätzlich für eine Fremdfasererkennung ausgewertet, läßt sich die Anzahl der Bauelemente deutlich reduzieren. Eine eigene Lichtquelle für die Durchmesserbestimmung ist nicht mehr notwendig. Der Raumbedarf der Sensoreinrichtung wird geringer.

Eine weitere Reduzierung des Aufwandes kann erzielt werden, wenn gemäß Anspruch 4 nur Elemente zur Bestimmung des Betrages der Geschwindigkeit eingesetzt werden. Deshalb kann beispielsweise auf eine für die Bestimmung der Bewegungsrichtung beim LDA-Verfahren üblicherweise eingesetzte Bragg-Zelle verzichtet werden. Dadurch verringert sich der erforderliche Vorrichtungsaufwand.

Die Erfindung erlaubt eine dynamische Messung der Garngeschwindigkeit, also eine Messung, bei der stets für die Bewertung von Garnfehlern die momentane Garngeschwindigkeit und nicht zum Beispiel ein Mittelwert der Garngeschwindigkeit bestimmt wird. Dabei ist der anfallende Rechenaufwand mit gebräuchlichen Prozessoren, wie sie an einer Arbeitsstelle einer Spul- oder Spinnspulmaschine eingesetzt werden können, problemlos zu bewältigen. Es ist möglich, die Garngeschwindigkeiten mit sehr hoher Zeitauflösung und damit sehr genau zu bestimmen.

Mit vorteilhaften Ausbildungen der vorliegenden Erfindung läßt sich insbesondere der bauliche beziehungsweise kostenintensive Aufwand deutlich reduzieren. In Kenntnis der oben angeführten druckschriftlichen Veröffentlichungen hat die Fachwelt diesen Stand der Technik über ein Jahrzehnt nicht als Anregung verstanden, das LDA-Verfahren online an den Arbeitsstellen einer Vielstellen-Textilmaschine, wie sie eine von Spul- oder Spinnspulmaschine mit einer Vielzahl von Spulstellen darstellt, einzusetzen. Es wurde vielmehr, wie den Veröffentlichungen zu entnehmen ist, in der Fachwelt die Auffassung vertreten, daß trotz Miniaturisierung und Anpassung von optischen Bauelementen für derartige Meßsysteme der Aufwand zu hoch sei und das LDA-Verfahren daher nur bei Laboranordnungen für Forschungszwecke einsetzbar sei. Die Fachwelt hat bis heute nicht erkannt, daß sich das LDA-Verfahren in einer solchen Ausbildung durchführen läßt, daß die Kosten und der Bedarf an Bauraum an der Spulstelle in einem akzeptablen Rahmen gehalten werden können. Der Vorteil einer hochgenauen berührungslosen Messung kann bei der vorliegenden Erfindung zum Tragen kommen, ohne daß die bisher damit verbundenen Nachteile, wie hoher Aufwand oder unzureichende Rechenkapazität, in Kauf genommen werden müssen. Die hochgenaue Bestimmung der Garngeschwindigkeit wird bei der Herstellung jeder einzelnen Spule vorgenommen. Dieser gravierende Vorteil wurde bisher nicht genutzt.

Durch die Erfindung wird die Garnreinigung an Spul- oder Spinnspulmaschinen verbessert. Unnötige, weil durch fehlerhafte Garngeschwindigkeit bei der Bewertung der Länge von Garnfehlern hervorgerufene Reinigerschnitte werden vermieden. Auszureinigende Garnfehler, die mit bekannten Vorrichtungen und Verfahren nicht erfaßt werden, werden mittels des Erfindungsgegenstandes erkannt. Damit läßt sich sowohl die Produktivität der Maschine als auch die Qualität des Garns steigern.

Weitere Einzelheiten der Erfindung werden anhand von in den Figuren gezeigten Ausführungsbeispielen näher erläutert.

Es zeigen:
- Fig. 1: eine vereinfachte Darstellung einer Spulstelle einer Spulmaschine mit einem Meßkopf, der zur Geschwindigkeitsmessung ausgerüstet ist,
- Fig. 2: eine Prinzipskizze des Aufbaus einer Geschwindigkeitsmeßvorrichtung,
- Fig. 3: eine vereinfachte Darstellung von Interferenzstreifen,
- Fig. 4: ein LDA-Signal,
- Fig. 5: eine Prinzipskizze einer Geschwindigkeitsmeßvorrichtung mit Rückwärtsstreuung,
- Fig. 6: eine Prinzipskizze einer alternativen Ausführung einer Geschwindigkeitsmeßvorrichtung.

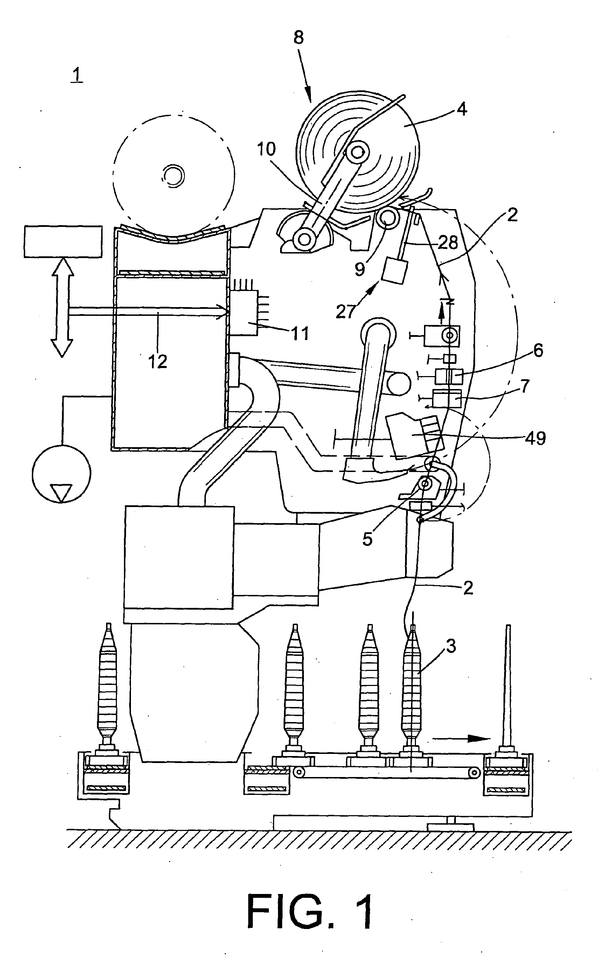

Figur 1 zeigt eine Spulstelle 1 einer Spulmaschine, bei der der Fadenlauf des Fadens 2 zwischen einem Spinnkops 3 als Ablaufspule und einer Kreuzspule 4 als Auflaufspule dargestellt ist. Der vom Spinnkops 3 abgezogene Faden 2 durchläuft während des Spulvorgangs eine Fadenspanneinrichtung 5, eine Schneideinrichtung 7 sowie einen Meßkopf 6. Der Faden 2 wird in der Wickeleinrichtung 8 auf die in der Darstellung der Figur 1 im Uhrzeigersinn rotierende Kreuzspule 4 aufgewickelt. Während des Spulprozesses liegt die Kreuzspule 4 mit ihrer Oberfläche auf einer als Andrückwalze ausgebildeten Stützwalze 9 und nimmt diese antriebslose Andrückwalze über Reibschluß mit. Der Antrieb der Kreuzspule 4 erfolgt über die Achse der Kreuzspule 4 mittels der direkt am Spulenrahmen 10 angeordneten beziehungsweise in den Spulenrahmen 10 integrierten Antriebseinrichtung. Zur Changierung des Fadens 2 während des Spulprozesses weist die Spulstelle 1 eine Fadenchangiereinrichtung 27 auf. Die Verlegung des Fadens 2 erfolgt mittels eines in Richtung der Rotationsachse der Kreuzspule 4 hin- und herbewegten Fadenführers 28. Ein Rechner 11 umfaßt eine Steuereinrichtung, eine Auswerteeinheit für die Meßwerte des Meßkopfes 6 sowie eine Speichereinheit. Der Rechner 11 ist über die Leitung 12 mit weiteren aus Vereinfachungsgründen nicht näher dargestellten Rechnern, Steuereinrichtungen und Datenspeichern verbunden.

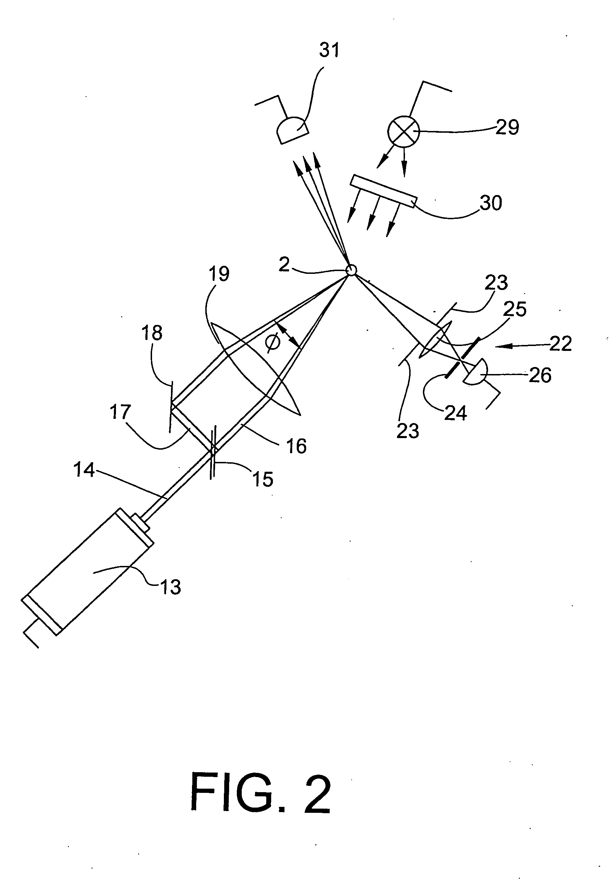

Der prinzipielle Aufbau eines erfindungsgemäßen Meßkopfes 6 ist in Figur 2 dargestellt. Der als Lichtquelle eingesetzte Laser 13 erzeugt einen Laserstrahl 14, dessen Frequenz sehr genau bekannt ist. Der Laserstrahl 14 wird an der Platte 15 in zwei Laserstrahlen 16, 17 geteilt. Die beiden Laserstrahlen 16, 17 haben die gleiche Intensität. Der Laserstrahl 17 wird vom Spiegel 18 derart umgelenkt, daß er bis zur Linse 19 parallel zum Laserstrahl 16 verläuft. Mittels der Linse 19 werden die Laserstrahlen 16, 17 so ausgerichtet, daß sich beide im Brennpunkt der Linse 19 treffen. Der Brennpunkt liegt im Bereich des Fadens 2.

Beide Laserstrahlen 16, 17 wirken als Meßstrahlen. Das Laserlicht der Laserstrahlen 16, 17 wird von der Oberfläche des Fadens 2, auf den sie auftreffen, gestreut. Wenn der Faden 2 sich bewegt, findet eine Relativbewegung zwischen dem Laser 13 als dem Sender der Lichtwellen und dem Faden 2 als dem Empfänger statt. In diesem Fall tritt in Abhängigkeit von der Relativgeschwindigkeit eine Veränderung der vom Faden reflektierten Lichtwellen auf, die als Doppler-Effekt bekannt ist.

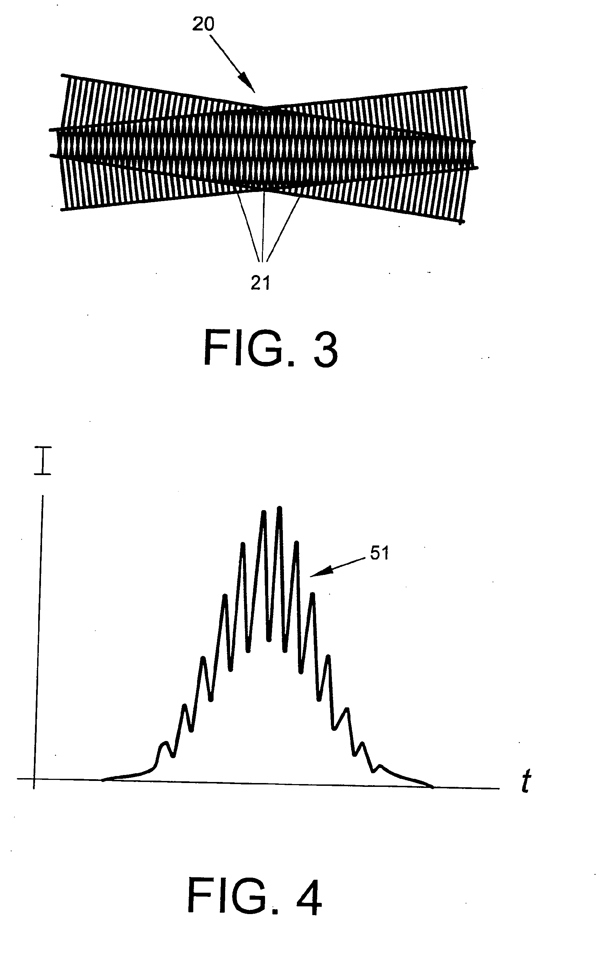

Die Lichtwellen der vom Faden 2 reflektierten Laserstrahlen 16, 17 bilden aus dunklen und hellen Bereichen, den Interferenzstreifen 21, ein Interferenzmuster 20 im Raum, wie beispielhaft in Figur 3 gezeigt, wobei sich die Lichtwellen der beiden Laserstrahlen 16, 17 überlagern. Wenn ein geeigneter Empfänger in diesem Raum angeordnet wird, läßt sich das Interferenzmuster 20 sichtbar machen. Der Bereich, den die beiden Laserstrahlen 16, 17 durchdringen, wird als Meßvolumen bezeichnet. Als Empfänger dient ein Detektor 22, der zwei Blenden 23, 24, eine Sammellinse 25 und ein Sensorelement 26 aufweist.

Das vom Faden reflektierte Streulicht wird von der Blende 23 vor dem Sensorelement 26 abgeschirmt. Die Sammellinse 25 fokussiert nur vom Faden 2 reflektiertes Streulicht als sogenannte Rückwärtsstreuung auf das Sensorelement 26. Das Sensorelement 26 nimmt eine mit der Schwebungsfrequenz F_{S} oszillierende Intensität auf. Die Schwebungsfrequenz F_{S} bildet sich aus der Differenz der beiden Doppler-verschobenen Lichtfrequenzen F_{D1} und F_{D2} der Laserstrahlen 16, 17.

Das Verfahren mit der beschriebenen Aufteilung des vom Laser 13 erzeugten Laserstrahls 14 in die Laserstrahlen 16 und 17 wird als LDA-Zweistrahl-Verfahren bezeichnet. Beim LDA-Zweistrahl-Verfahren hängt die detektierte Schwebungsfrequenz F_{S} nicht von der Position des Detektors 22 in Relation zum Faden 2 ab. Daher kann der Detektor 22 an einer weitgehend frei wählbaren Position angeordnet sein, und die das Streulicht fokussierende Sammellinse 25 kann mit einem großen Durchmesser ausgebildet sein.

Der Verlauf der Kurve 51 eines detektierten Geschwindigkeitssignals, eines das Meßvolumen durchquerenden Teiles, ist, über die Zeit t aufgetragen, in Figur 4 dargestellt. Das Sensorelement 26 nimmt eine Intensität I des Lichtes auf, die im wesentlichen durch die Intensitätsverteilung im Laserstrahl 14 und durch die Schwebefrequenz F_{S} der beiden Doppler-verschobenen Lichtwellen bestimmt ist. Der Verlauf der vom Sensorelement 26 detektierten Intensität des Lichts wird über entsprechende Auswertealgorithmen bearbeitet und die für die Geschwindigkeit des Fadens 2 relevanten Signale separiert, ausgewertet und in ein digitalisiertes Geschwindigkeitssignal umgesetzt.

Der Meßkopf 6 umfaßt, wie in der Figur 2 gezeigt, neben den Elementen zur Bestimmung der Geschwindigkeit Elemente zur Bestimmung des Durchmessers des Fadens 2. Das von einer Lichtquelle 29 emittierte Licht passiert ein Optikelement 30 und wird vom Faden 2 reflektiert. Reflektiertes Licht wird von einem Sensor 31 detektiert. Die abhängig von der Lichtstärke generierten Meßsignale werden zur Bestimmung des Durchmessers des Fadens 2 im Rechner 11 ausgewertet.

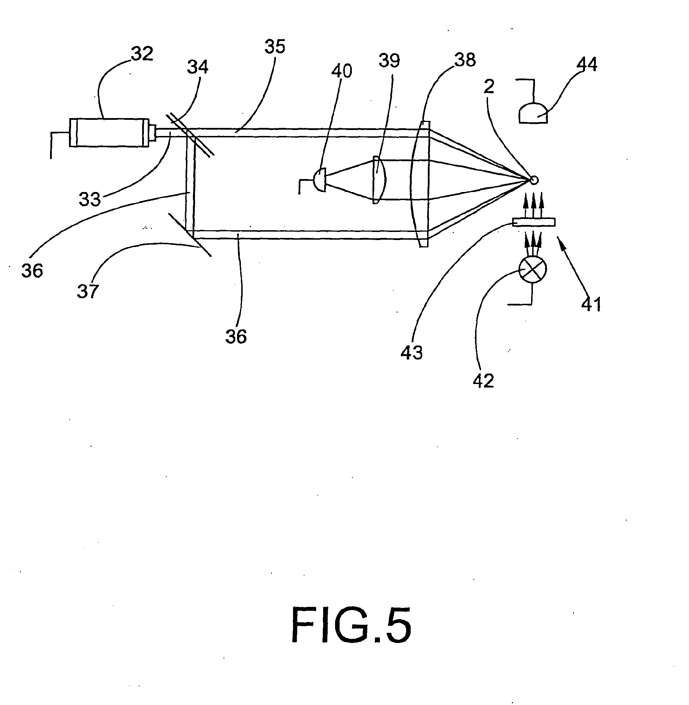

Einen alternativen Aufbau des Meßkopfes 6 zeigt Figur 5. Der Laser 32 erzeugt einen Laserstrahl 33, der von der Platte 34 in zwei Laserstrahlen 35, 36 mit gleicher Intensität geteilt wird. Der Spiegel 37 lenkt den Laserstrahl 36 so um, daß er parallel zum Laserstrahl 35 verläuft. Beide Laserstrahlen 35, 36 werden vom Optikmodul 38 auf den Faden 2 fokussiert. Das vom Faden 2 reflektierte Streulicht wird von den Optikmodulen 38 und 39 auf den Sensor 40 gelenkt. Meßköpfe, die mit Rückwärtsstreuung arbeiten, lassen einen kompakten, raumsparenden Aufbau zu. Die Bestimmung des Durchmessers des Fadens 2 erfolgt mittels einer Meßeinrichtung 41, die eine Lichtquelle 42, ein Optikmodul 43 und einen Sensor 44 aufweist. Der Sensor 44 ist so angeordnet, daß auf ihm der vom Faden 2 geworfene Schatten abgebildet wird. Der Sensor 44 kann als einfache Fotozelle oder als CCD-Zeilensensor ausgebildet sein.

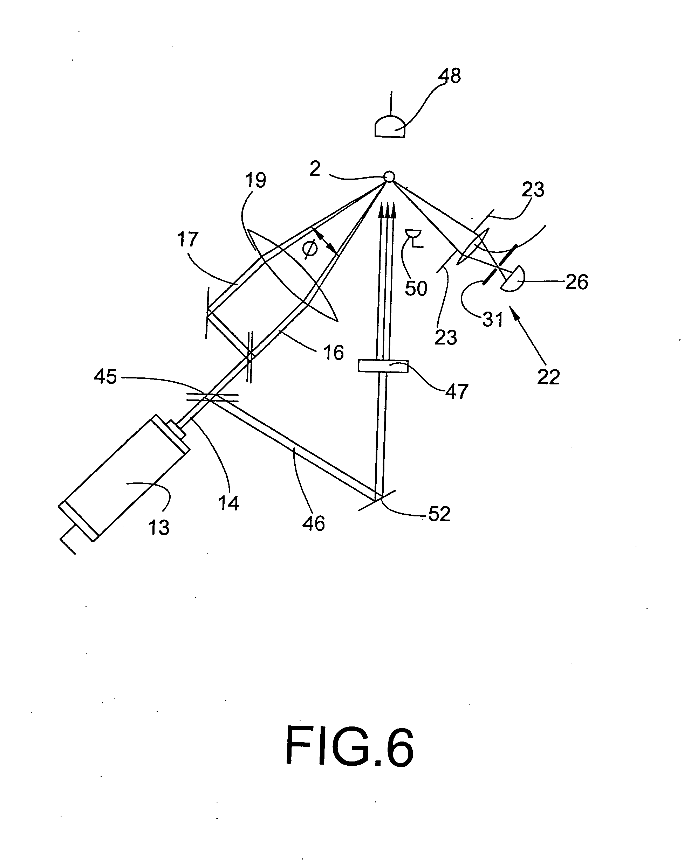

Figur 6 zeigt einen weiteren, alternativen Aufbau des Meßkopfes 6 in einer vereinfachten Darstellung. Der Aufbau zur Geschwindigkeitsbestimmung entspricht dem Aufbau der Figur 1. Zur Durchmesserbestimmung des Fadens 2 wird mittels der Platte 45 ein Partialstrahl 46 des vom Laser 13 erzeugten Laserstrahls 14 gebildet, mittels des Spiegels 52 umgelenkt und mit Hilfe des Optikmoduls 47 auf den Faden 2 gerichtet. Der Sensor 48 detektiert das vom Durchmesser des Fadens 2 abhängige Licht und liefert Meßsignale an den Rechner 11, aus denen der Durchmesser des Fadens 2 bestimmt wird. Eine Auswertung der Meßsignale der Sensoren 48 und 50 kann als Bestandteil einer Fremdfasererkennung erfolgen.

Alternativ kann die Auswerteeinheit, die der Auswertung der Geschwindigkeitsmeßsignale, der Fadendurchmessermeßsignale der Fremdfasererkennungssignale oder von allen Meßsignalarten zusammen dient, ein Modul des Meßkopfes 6 sein.

Der Faden 2 unterliegt einer kontinuierlichen Qualitätsüberwachung. Dazu wird neben der Geschwindigkeit mittels des berührungslos arbeitenden Meßkopfes 4 der Durchmesser beziehungsweise die Dicke des laufenden Fadens 2 bestimmt. Die Meßsignale werden ausgewertet und die Fadengeschwindigkeit ermittelt. Über einen Integrator, der Teil der Auswerteeinrichtung ist, wird die Fadengeschwindigkeit zur kumulativen Längenbestimmung des Fadens 2 ausgewertet.

Erfaßt der Meßkopf 6 eine unzulässige Unter- oder Überschreitung der Dicke des Fadens 2, wird die Länge dieses Garnfehlers über den Rechner 11 bestimmt. Zeigt sich, daß ein Garnfehler vorliegt, der gemäß vorgegebener Reinigungsgrenze einer Qualitätsmatrix unzulässig ist, wird die Schneideinrichtung 7 aktiviert und ein Reinigerschnitt in an sich bekannter Weise durchgeführt. Nach dem Eliminieren des fehlerbehafteten Fadenabschnittes durch Herausschneiden, wie es beispielsweise aus der DE 196 14 184 A1 oder dem parallelen US-Patent No. 5,862,660 bekannt ist, werden die Fadenenden in einer Spleißeinrichtung 49 wieder verbunden und der Spulvorgang anschließend fortgesetzt.

In Verbindung mit der hochgenauen Längenmessung ist eine qualitativ hochwertige Qualitätsüberwachung des Fadens 2 erreichbar. Die hohe Meßsicherheit ermöglicht eine Verminderung der Reinigerschnitte und damit der Garnqualität sowie eine Steigerung der Produktivität durch Vermeidung unnötiger Unterbrechungen des Spulvorgangs.

Die Erfindung ist nicht auf die dargestellten Ausführungsbeispiele beschränkt. Im Rahmen des Erfindungsgedankens sind weitere alternative Ausbildungen möglich, ohne daß dadurch der allgemeine Erfindungsgedanke verlassen wird.

## Patentansprüche

1. Verfahren zum berührungslosen Bestimmen der Geschwindigkeit eines laufenden Fadens an einer Spulstelle einer Textilmaschine mittels einer Sensoreinrichtung,
**dadurch gekennzeichnet,**
**daß** von einer Lichtquelle ein Laserstrahl (14, 33) erzeugt und dieser in zwei Laserstrahlen (16, 17; 35, 36) geteilt wird,
**daß** die zwei Laserstrahlen (16, 17; 35, 36) so geführt werden, daß sie am laufenden Faden (2) wieder zusammentreffen,
**daß** aus dem vom Faden (2) reflektierten Licht Meßsignale erzeugt werden,
**daß** die Erzeugung der Meßsignale nach dem Laser-Doppler-Anemometrie-Verfahren erfolgt,
**daß** die Meßsignale für eine Längenmessung ausgewertet werden und daß das Ergebnis der Längenmessung zur exakteren Bestimmung von Garnfehlern herangezogen wird.

2. Verfahren nach Anspruch 1, **dadurch gekennzeichnet, daß** zur Bestimmung von Garnfehlern der Fadendurchmesser detektiert und die Qualitätsverbesserung des Fadens (2) mittels eines Garnreinigers vorgenommen wird.

3. Verfahren nach Anspruch 1 oder 2, **dadurch gekennzeichnet, daß** ein für die Geschwindigkeitsmessung nach dem Laser-Doppler-Anemometrie-Verfahren erzeugter Laserstrahl (14) zusätzlich der Messung des Durchmessers des Fadens (2) dient.

4. Verfahren nach einem der Ansprüche 1 bis 3, **dadurch gekennzeichnet, daß** nur Elemente zur Bestimmung des Betrages der Geschwindigkeit ohne Bestimmung der Bewegungsrichtung eingesetzt werden.

5. Verfahren nach einem der Ansprüche 1 bis 4, **dadurch gekennzeichnet, daß** die vom Faden (2) reflektierten Laserstrahlen (16, 17; 35, 36) zusätzlich bei einer Fremdfasererkennung ausgewertet werden.

6. Vorrichtung zur berührungslosen Bestimmung der Geschwindigkeit eines laufenden Fadens (2) mit einer Sensoreinrichtung, **dadurch gekennzeichnet, daß** die Vorrichtung an einer Spulstelle einer Textilmaschine angeordnet ist, daß die Sensoreinrichtung eine Lichtquelle zur Generierung eines Laserstrahles (14, 33) und eine optische Einrichtung umfaßt, die derart ausgeführt ist, daß der Laserstrahl (14, 33) in zwei Laserstrahlen (16, 17; 35, 36) geteilt wird, die sich am laufenden Faden (2) wieder treffen, daß die Vorrichtung eine Detektionseinrichtung (22) mit einem Empfänger und einer vor dem Empfänger angeordneten Abbildungsoptik sowie einer Auswerteeinheit aufweist, die so eingerichtet ist, daß sie die Meßsignale zur Bestimmung der Geschwindigkeit des Fadens (2) verarbeitet.

7. Vorrichtung nach Anspruch 6, **dadurch gekennzeichnet, daß** die Auswerteeinheit einen Integrator umfaßt, mit dem Fadenlängen aus der Geschwindigkeit des Fadens (2) bestimmbar sind, und die Sensoreinrichtung Elemente zur Detektion des Durchmessers des Fadens (2) aufweist.

8. Vorrichtung nach einem der Ansprüche 6 oder 7, **dadurch gekennzeichnet, daß** die Sensoreinrichtung zur Fremdfasererkennung eingerichtet ist.

9. Vorrichtung nach einem der Ansprüche 6 bis 8, **dadurch gekennzeichnet, daß** die Bauteile zur Fremdfasererkennung mit den Bauteilen zur Geschwindigkeitsmessung in einem gemeinsamen Gehäuse angeordnet sind.
